# EUROPEAN PATENT APPLICATION

(11) **EP 1 016 696 A1**
(43) Date of publication of application: **05.07.2000**
(21) Application number: 99403294.4
(22) Date of filing: 28.12.1999
(51) Int. Cl.: C09D 5/44, C08G 59/14, C09D 163/00

(54) **Cationic electrodeposition coating composition, method for forming double-layer coatings and double-layer coatings**

(30) Priority: 28.12.1998 JP 37249198
(71) Applicant: Nippon Paint Co., Ltd., Osaka-shi, Osaka 531-0077 (JP)
(72) Inventor: Sakamoto, Hiroyuki, Kobe-shi, Hyogo 658-0032 (JP); Takeshita, Sho, Ibarakishi, Osaka 567-0872 (JP); Kawakami, Ichiro, Takatsuki-shi, Osaka 569-1044 (JP); Uchidoi, Satoru, Osaka-shi, Osaka 535-0003 (JP); Saito, Takao, Toyonaka-shi, Osaka 560-0002 (JP)
(74) Representative: Hubert, Philippe

(57) **Abstract**

A cationic electrodeposition coating composition is provided which can provide corrosion resistance without containing any solid rust preventive component and which can minimize the environmental pollution. The composition comprises a sulfonium- and propargyl-containing resin composition as main component.

## Description

### FILED OF THE INVENTION

The present invention relates to a cationic electrodeposition coating composition, a method for forming double-layer coatings, and double-layer coatings.

### PRIOR ART

Electrodeposition coating compositions are excellent in corrosion resistance and throwing power and can form uniform coatings and, therefore, are widely used, especially as primers for automotive bodies and parts. From the corrosion prevention viewpoint, in particular, cationic electrodeposition coating compositions have now been used widely. In cationic electrodeposition coating compositions, rust preventive pigments, such as lead compounds, for example basic lead silicate, have been used to attain high corrosion resistance. In recent years, however, the use of lead compounds has been restricted because of their toxicity which causes an environmental pollution problem, among others. Therefore, the so-called lead-free cationic electrodeposition coating compositions are demanded.

As substitutes for lead compounds in lead-free cationic electrodeposition coating compositions, there have been tested phosphate pigments, molybdate pigments and borate pigments, among others. These, however, have a drawback, they are inferior in corrosion preventing effect to lead compounds. In addition, the use of iron oxide is disclosed in JP Kokai Hei-02-279,773, of copper, nickel, zinc, cobalt, chromium, aluminum, manganese, zirconium, tin or iron in JP Kokai Hei-04-325,572, of bismuth hydroxide/tin, cerium hydroxide/tin or nickel hydroxide/tin in JP Kokai Hei-05-140,487, of lanthanum compounds in JP Kokai Hei-05-239,386, of bismuth compounds/tin in JP Kokai Hei-05-247,385 and, further, of tungsten compounds in JP Kokai Hei-06-220,371. In every case, however, the anticorrosive effect is unsatisfactory.

The substances mentioned above are mostly intended for use as substitutes for lead compounds in cationic electrodeposition coating compositions having blocked isocyanate-based curing systems. Thus, any cationic electrodeposition coating compositions free of any solid rust preventive component or any attempts to add a rust preventive component to intermediate coating compositions are not known in the art.

### SUMMARY OF THE INVENTION

It is an object of the present invention to provide a cationic electrodeposition coating composition which contains no solid rust preventive component but can maintain its corrosion resistance and with which the risk of environmental pollution can be reduced to the utmost.

Another object of the invention is to provide a double-layer coating excellent in corrosion resistance as formed by applying an intermediate coating composition to the coating obtained from the above cationic electrocoating deposition coating composition.

The cationic electrodeposition coating composition of the present invention is characterized in that it comprises a sulfonium- and propargyl-containing resin composition as main component and contains no solid rust preventive component.

The present invention further provides a double-layer coating excellent in corrosion resistance as formed by applying an intermediate coating composition to the coating obtained from the above cationic electrocoating deposition coating composition.

### DETAILED DESCRIPTION OF THE INVENTION

### Cationic electrodeposition coating composition

The cationic electrodeposition coating composition of the present invention comprises a sulfonium- and propargyl-containing resin composition as main component and is free of any solid rust preventive component. The term "solid rust preventive component" as used herein means a component which, when added to an electrodeposition coating composition, prevents substrates from pitting corrosion and rusting and which occurs as a solid in said coating composition.

Such solid rust preventive component includes those well known in the art, for example lead compounds such as basic lead silicate, phosphate pigments, molybdate pigments and borate pigments. Mention may further be made of iron oxide, copper, nickel, zinc, cobalt, chromium, aluminum, manganese, zirconium, tin, iron, bismuth hydroxide/tin, cerium hydroxide/tin, nickel hydroxide/tin, lanthanum compounds, bismuth compounds/tin, tungsten compounds, calcium phosphite, zinc phosphite, zinc calcium phosphite, calcium on silica, calcium on zeolite and the like. The cationic electrodeposition coating composition of the present invention does not contain any of the above solid rust preventive components.

The cationic electrodeposition coating composition of the present invention may not contain any other solid component. When it is free of said other solid component, the cationic electrodeposition coating composition of the present invention can be a clear electrodeposition coating composition for which the electrodeposition coating bath can easily be controlled.

As the other solid component in the present invention, there may be mentioned those normally occurring as solids in electrodeposition coating compositions other than the above-mentioned solid rust preventive components. Thus, for example, color pigments, filler pigments and like pigments may be mentioned. Said color pigments include those well known in the art, for example titanium dioxide, carbon black and iron oxide red. Said filler pigments include those well known in the art, for example kaolin, clay and talc. If the cationic electrodeposition coating composition of the present invention contains a solid color component, the content of said component is preferably not more than 35% by weight, more preferably 0.5 to 25% by weight, per 100 g of the solid matter in the coating composition.

The cationic electrodeposition coating composition of the present invention comprises, as main component, a sulfonium- and propargyl-containing resin composition. The resin that constitutes said resin composition may have both sulfonium and propargyl groups in each molecule. This is not always necessary, however. Thus, for example, one molecule may have either of the sulfonium and propargyl groups. In that case, the resin composition as a whole has both of these two curing functional groups. Thus, said resin composition may comprise a sulfonium- and propargyl-containing resin or a mixture of a sulfonium-containing resin and a propargyl-containing resin, or a mixture of all of these. The resin composition contained in the cationic electrodeposition coating composition of the present invention has sulfonium and propargyl groups in the above sense.

Said sulfonium group is a hydratable functional group in said resin composition. When a voltage or current is applied thereto at a certain level or above during electrodeposition coating, the sulfonium group can be irreversibly converted to a passive state as a result of its electrolytic reduction on the electrode, hence loss of its ionicity. This is supposedly the reason why the cationic electrodeposition coating composition of the present invention can show high throwing power.

It is also presumable that, during electrodeposition coating, electrode reaction be induced to form hydroxide ion, and the sulfonium ion hold this hydroxide ion to form an electrolytically generated base in the electrodeposited coating. Said electrolytically generated base can convert propargyl group, which occurs in the electrodeposited coating and is low in reactivity upon heating, to an allene bond, which is higher in reactivity upon heating.

The resin that constitutes the backbone of the resin composition contained in the cationic electrodeposition coating composition according to the present invention is not particularly restricted but is preferably an epoxy resin. Suited for use as the epoxy resin are those having at least two epoxy groups per molecule. More specifically, there may be mentioned epi-bis type epoxy resins, modifications thereof as obtained by chain extension with a diol, a dicarboxylic acid, a diamine or the like; epoxidized polybutadiene; novolak phenol type polyepoxy resins; novolak cresol type polyepoxy resins, polyglycidyl acrylate; polyglycidyl ethers of aliphatic polyol or polyether polyol; polybasic carboxylic acid polyglycidyl esters; and like polyepoxy resins. Among them, novolak phenol type polyepoxy resins, novolak cresol type polyepoxy resins and polyglycidyl acrylate are preferred because they can easily be polyfunctionalized for curability improvement. Said epoxy resins may partly comprise a monoepoxy resin.

The resin composition contained in the cationic electrodeposition coating composition according to the present invention comprises a resin having the above epoxy backbone. It has a number average molecular weight of 500 to 20,000. When the number average molecular weight is below 500, the coating efficiency of the cationic electrodeposition coating is poor If it exceeds 20,000, no good coating can be formed on the surface of a substrate or article to be coated. Said number average molecular weight can be selected within a more preferred range, which depends on the resin backbone. In the case of novolak phenol type epoxy backbone and novolak cresol type epoxy backbone, for instance, it is preferably within the range of 700 to 5,000.

The sulfonium group content in the above resin composition is 5 to 400 millimoles per 100 grams of the solid matter in said resin composition, on condition that the requirement relative to the total content of sulfonium and propargyl groups, which is to be mentioned later herein, is satisfied. If it is less than 5 millimoles per 100 grams, sufficient throwing power or curability cannot be attained and the hydratability and bath stability will be poor. If it exceeds 400 millimoles per 100 grams, the deposition of coatings on substrate surfaces becomes poor. Said sulfonium group content can be selected within a more preferred range, which depends on the resin backbone employed. In the case of novolak phenol type epoxy backbone and novolak cresol type epoxy backbone, for instance, it is preferably within the range of 5 to 250, further preferably 10 to 150 millimoles, per 100 grams of the solid matter in the resin composition.

The propargyl group in said resin composition functions as a curing functional group in the cationic electrodeposition coating composition according to the present invention. For unknown reasons, the throwing power of the cationic electrodeposition coating composition can be further improved when said group coexists with the sulfonium group.

The propargyl group content in the above-mentioned resin composition is 10 to 495 millimoles per 100 grams of the solid matter in said resin composition, on condition that the requirement relative to the total content of sulfonium and propargyl groups, which is to be mentioned later herein, is satisfied. If it is less than 10 millimoles per 100 grams, sufficient throwing power or curability cannot be obtained. If it exceeds 495 millimoles per 100 grams, hydration stability of the cationic electrodeposition coating composition may adversely be affected. Said propargyl group content can be selected within a more preferred range, which depends on the backbone employed. In the case of novolak phenol type epoxy backbone and novolak cresol type epoxy backbone, for instance, it is preferably within the range of 20 to 395 millimoles per 100 grams of the solid matter in the resin composition.

The total content of the sulfonium and propargyl groups in the above resin composition is not more than 500 millimoles per 100 grams of the solid matter in the resin composition. If it exceeds 500 millimoles per 100 grams, no resin may be obtained in practice or the desired performance characteristics may not be obtained in certain instances. Said total content of sulfonium and propargyl groups in said resin composition can be selected within a more preferred range, which depends on the backbone employed. In the case of novolak phenol type epoxy backbone and novolak cresol type epoxy backbone, for instance, it is preferably within the range of not more than 400 millimoles.

The propargyl groups in the resin composition contained in the cationic electrodeposition coating composition according to the present invention may partly be in an acetylide form. The acetylide is a salt-like metal compound with acetylene. The content of those propargyl groups occurring in the form of acetylide in the above resin composition is preferably 0.1 to 40 millimoles per 100 grams of the solid matter in the resin composition. When it is less than 0.1 millimole, the effect of the acetylide form cannot be fully produced, while it is difficult to attain an acetylide content exceeding 40 millimoles. Said content can be selected within a more preferred range which depends on the metal employed.

The metal contained in said acetylide-form propargyl group is not particularly restricted but may be any metal showing catalytic activity. As examples, there may be mentioned transition metals such as copper, silver and barium. Among them, copper and silver are preferred because of their environmental friendliness and copper is more preferred because of its ready availability. Where copper is used, the content of the acetylide-form propargyl group is more preferably 0.1 to 20 millimoles per 100 grams of the solid matter in the resin composition.

By converting part of the propargyl groups in the resin composition contained in the cationic electrodeposition coating composition according to the present invention to an acetylide form, it is possible to introduce a curing catalyst into the resin. By doing so, it becomes generally unnecessary to use an organic transition metal complex that is hardly soluble or dispersible in organic solvents or water. Since even a transition metal can easily be introduced, in an acetylide form, into the resin, the transition metal can be freely used in the coating composition even when the corresponding transition metal compound is a hardly soluble one. Furthermore, the occurrence of an organic acid anion in the electrodeposition bath, as is found when a transition metal organic acid salt is used, can be avoided and, in addition, removal of the metal ion upon ultarfiltration is no more caused. The bath control and cationic electrodeposition coating composition designing thus become easy.

The resin composition contained in the cationic electrodeposition coating composition according to the present invention may contain a carbon-carbon double bond, if desirable. The carbon-carbon double bond is highly reactive and, therefore, can further improve the curability.

The content of said carbon-carbon double bond is preferably 10 to 485 millimoles per 100 grams of the solid matter in the resin composition, on condition that the requirement relative to the total content of the propargyl group and carbon-carbon double bond, which is to be mentioned later herein, is satisfied. If it is less than 10 millimoles per 100 grams, said bond cannot contribute toward attaining sufficient curability. If it exceeds 485 millimoles per 100 grams, the hydration stability of the cationic electrodeposition coating composition may possibly be adversely affected. Said carbon-carbon double bond content can be selected within a more preferred range depending on the backbone employed. In the case of novolak phenol type epoxy backbone and novolak cresol type epoxy backbone, for instance, said content is preferably 20 to 375 millimoles per 100 grams of the solid matter in the resin composition.

In cases where the resin composition contains said carbon-carbon double bond, the total content of the above propargyl group and carbon-carbon double bond is preferably within the range of 80 to 450 millimoles per 100 grams of the solid matter in the resin composition. If it is less than 80 millimoles, the curability may possibly be insufficient. If it exceeds 450 millimoles, the sulfonium group content must be reduced and, as a result, the throwing power may possibly become insufficient. The total content of the propargyl group and carbon-carbon double bond can be selected within a more preferred range depending on the backbone employed. In the case of novolak phenol type epoxy backbone and novolak cresol type epoxy backbone, for instance, said total content is preferably 100 to 395 millimoles.

Furthermore, in cases where the resin composition contains the above carbon-carbon double bond, the total content of the above sulfonium group, propargyl group and carbon-carbon double bond is preferably not more than 500 millimoles per 100 grams of the solid matter in the resin composition. If it exceeds 500 millimoles, no resin may be obtained in practice or the desired performance characteristics may not be obtained in certain instances. Said total content of sulfonium group, propargyl group and carbon-carbon double bond can be selected within a more preferred range depending on the backbone employed. In the case of novolak phenol type epoxy backbone and novolak cresol type epoxy backbone, for instance, said total content is preferably not more than 400 millimoles.

The resin composition to be contained in the cationic electrodeposition coating composition according to the present invention can advantageously be produced, for example, by (i) reacting an epoxy resin having at least two epoxy groups per molecule with a compound having both a propargyl group and a functional group capable of reacting with the epoxy group, to give a propargyl-containing epoxy resin composition, and (ii) reacting the remaining epoxy groups in the propargyl-containing epoxy resin composition obtained in step (i) with a sulfide/acid mixture to thereby introduce sulfonium groups into said resin composition.

Said compound having both a propargyl group and a functional group capable of reacting with the epoxy group (hereinafter such compound is referred to as "compound A") may be a compound having a hydroxyl or carboxyl group or like functional group capable of reacting with the epoxy group, together with a propargyl group and specifically includes propargyl alcohol, propargylic acid and the like. Among them, propargyl alcohol is preferred because of its ready availability and ease of reaction.

In cases where the resin composition to be contained in the cationic electrodeposition coating composition according to the present invention has a carbon-carbon double bond as necessary, a compound having both a carbon-carbon double bond and a functional group capable of reacting with the epoxy group (hereinafter such compound is referred to as "compound B") can be used in combination with the above-mentioned compound A in the above step (i). Said compound B may be, for example, a compound having a hydroxy or carboxyl group or like functional group capable of reacting with the epoxy group, together with a carbon-carbon double bond As specific examples in which the functional group capable of reacting with the epoxy group is a hydroxy group, there may be mentioned 2-hydroxyethyl acrylate, 2-hydroxyethyl methacrylate, hydroxypropyl acrylate, hydroxypropyl methacrylate, hydroxybutyl acrylate, hydroxybutyl methacrylate, allyl alcohol, methallyl alcohol and the like. When the functional group capable of reacting with the epoxy group is a carboxyl group, mention may be made of acrylic acid, methacrylic acid, ethacrylic acid, crotonic acid, maleic acid, phthalic acid, itaconic acid; half esters such as maleic acid ethyl ester, fumaric acid ethyl ester, itaconic acid ethyl ester, succinic acid mono(meth)acryloyloxyethyl ester and phthalic acid mono(meth)acryloyloxyethyl ester; synthetic unsaturated fatty acids such as oleic acid, linolic acid and ricinolic acid; and natural unsaturated fatty acids such as linseed oil and soybean oil, among others.

In the above step (i), said epoxy resin having at least two epoxy groups per molecule is reacted with said compound A to give a propargyl-containing epoxy resin composition. Alternatively, said epoxy resin is reacted with said compound A together with said compound B as necessary, to give a propargyl- and carbon-carbon double bond-containing epoxy resin composition. In the latter case, said compound A and compound B may be admixed beforehand and submitted to reaction in step (i) or said compound A and compound B may be separatedly submitted to reaction in said step. That functional group capable of reacting with the epoxy group in the compound A may be the same as or different from that functional group capable of reacting with the epoxy group in the compound B.

In the above step (i), the proportions of compound A and compound B, both to be submitted to reaction may be selected so that the desired functional group contents, for instance the total content of the propargyl group and carbon-carbon double bond specifically mentioned hereinabove, may be obtained.

The reaction in the above step (i) is generally carried out at room temperature or at 80-140°C for several hours. If necessary, a known component or components required for the reaction to proceed, for example a catalyst and/or a solvent, may be used. The completion of the reaction can be checked by measuring the epoxy equivalent, and the functional group(s) introduced can be confirmed by subjecting the resin composition obtained to nonvolatile matter measurement and/or instrumental analysis. Generally, the thus-obtained reaction product is a mixture of epoxy resins having one or a plurality of propargyl groups or a mixture of epoxy resins having a propargyl group or groups and one or a plurality of carbon-carbon double bonds. In this sense, the above step (i) gives a propargyl-containing, or propargyl- and carbon-carbon double bond-containing resin composition.

In the above step (ii), the remaining epoxy groups in the propargyl-containing epoxy resin composition obtained in the above step (i) is reacted with a sulfide/acid mixture for the introduction of a sulfonium group. The sulfonium introduction is carried out, for instance, by reacting the sulfide/acid mixture with the epoxy group for sulfide introduction and conversion to sulfonium, or by effecting sulfide introduction and further converting the sulfide introduced to a sulfonium using an acid or an alkyl halide, such as methyl fluoride, methyl chloride or methyl bromide, followed by anion exchange when necessary. From the viewpoint of ready availability of raw materials, the method which uses a sulfide/acid mixture is preferred.

Said sulfide is not particularly restricted but includes, among others, aliphatic sulfides, aliphatic-aromatic mixed sulfides, aralkyl sulfides and cyclic sulfides. More specifically, there may be mentioned diethyl sulfide, dipropyl sulfide, dibutyl sulfide, dihexyl sulfide, diphenyl sulfide, ethyl phenyl sulfide, tetramethylene sulfide, pentamethylene sulfide, thiodiethanol, thiodipropanol, thiodibutanol, 1-(2-hydroxyethylthio)-2-propanol, 1-(2-hydroxyethylthio)-2-butanol, 1-(2-hydroxyethylthio)-3-butoxy-1-propanol and the like.

The acid mentioned above is not particularly restricted but includes, among others, formic acid, acetic acid, lactic acid, propionic acid, boric acid, butyric acid, dimethylolpropionic acid, hydrochloric acid, sulfuric acid, phosphoric acid, N-acetylglycine, N-acetyl-β-alanine and the like.

Generally, the mixing molar ratio between said sulfide and acid in the sulfide/acid mixture (sulfide/acid) is preferably about 100/60 to 100/100.

The reaction in the above step (ii) can be carried out, for example, by mixing the propargyl-containing epoxy resin composition obtained in said step (i) and a mixture of predetermined amounts of said sulfide and acid sufficient to give the sulfonium group content mentioned above, for instance, with water in an amount of 5 to 10 moles per mole of the sulfide used and then stirring generally at 50-90°C for several hours. The end point of the reaction can be estimated by the fact that the residual acid value becomes 5 or less. The sulfonium group introduction into the resin composition obtained can be confirmed by potentiometric titration.

In cases where sulfide introduction is followed by conversion to sulfonium, the process can be carried out in the same manner as mentioned above. By effecting sulfonium introduction after propargyl group introduction, as mentioned above, the sulfonium group can be prevented from being decomposed upon heating.

In cases where part of the propargyl groups in the resin composition contained in the cationic electrodeposition coating composition are converted to an acetylide form, the step of acetylidization can comprise reacting the propargyl-containing epoxy resin composition obtained in the above step (i) with a metal compound to thereby convert part of the propargyl groups in said epoxy resin composition to the corresponding acetylide form. Said metal compound is preferably a transition metal compound capable of acetylide formation and includes, among others, complexes and salts of transition metals such as copper, silver and barium. More specifically, there may be mentioned copper acetylacetonate, copper acetate, silver acetylacetonate, silver acetate, silver nitrate, barium acetylacetonate, barium acetate and the like. Among them, copper and silver compounds are preferred from the viewpoint of environment-friendliness, and copper compounds are more preferred from the viewpoint of ready availability. Thus, for instance, copper acetylacetonate is suited for use in view of ease of bath control.

As for the reaction conditions, the conversion of part of the propargyl groups to an acetylide form is generally carried out at 40-70°C for several hours. The progress of the reaction can be checked, for example, by coloration of the resin composition obtained or by nuclear magnetic resonance spectrometry, namely through disappearance of the methyne proton signal. The time point of the acetylide formation reaction at which conversion of a desired proportion of the propargyl groups to an acetylide form is attained is confirmed in that manner and, at that time point, the reaction is terminated. The reaction product obtained is generally a mixture of epoxy resins in which one or a plurality of propargyl groups are in an acetylide form. The thus-obtained epoxy resin composition having part of the propargyl groups in an acetylide form can be subjected to the above step (ii) for sulfonium introduction thereinto.

The step of converting part of the propargyl groups owned by the epoxy resin composition to an acetylide form and the above step (ii) can be carried out simultaneously since common reaction conditions can be selected for both steps. When both steps are carried out simultaneously, the production process can advantageously be simplified.

In this manner, a propargyl- and sulfonium-containing and optionally carbon-carbon double bond-containing resin composition optionally having part of the propargyl groups in an acetylide form can be produced while preventing the sulfonium group(s) from being decomposed. Although acetylides, when in a dry state, have explosiveness, the acetylidization reaction is carried out in an aqueous medium and the desired substance can be obtained as an aqueous composition, so that no safety problems arise.

The cationic electrodeposition coating composition according to the present invention contains the above resin composition. In the cationic electrodeposition coating composition of the present invention, the use of a curing agent is not always necessary, since said resin composition itself has curability. For further improving the curability, however, a curing agent may be used. As such curing agent, there may be mentioned, among others, compounds obtained by addition-reacting a compound having a plurality of propargyl groups and/or carbon-carbon double bonds, such as polyepoxides derived from novolak phenol or the like, or pentaerythritol tetraglycidyl ether, with a propargyl-containing compound, such as propargyl alcohol, and/or a carbon-carbon double bond-containing compound, such as acrylic acid.

In the cationic electrodeposition coating composition according to the present invention, it is not always necessary to use a curing catalyst. In cases where it is necessary to further improve the curability depending on the curing reaction conditions, however, a transition metal compound or some other curing catalyst in general use may be added when necessary in an appropriate amount. Such compound is not particularly restricted but includes, among others, complexes or compounds resulting from binding of a ligand, such as cyclopentadiene or acetylacetone, or a carboxylic acid, such as acetic acid, to a transition metal, such as nickel, cobalt, manganese, palladium or rhodium. Said curing catalyst is used preferably in an amount of 0.1 to 20 millimoles per 100 grams of the solid matter in the cationic electrodeposition coating composition.

An amine may be incorporated into the cationic electrodeposition coating composition to be used according to the present invention. The incorporation of an amine results in an increased rate of conversion of the sulfonium group to a sulfide form as a result of electrolytic reduction in the electrodeposition process. Said amine is not particularly restricted but includes, among others, amine compounds, for example primary to tertiary, monofunctional or polyfunctional aliphatic amines, alicyclic amines and aromatic amines Among them, water-soluble or water-dispersible ones are preferred and thus, for instance, mention may be made of alkylamines containing 2 to 8 carbon atoms, such as monomethylamine, dimethylamine, trimethylamine, triethylamine, propylamine, diisopropylamine and tributylamine; monoethanolamine, diethanolamine, methylethanolamine, dimethylethanolamine, cyclohexylamine, morpholine, N-methylmorpholine, pyridine, pyrazine, piperidine, imidazoline, imidazole and the like. These may be used alone or two or more of them may be used combinedly. Among them, hydroxyamines, such as monoethanolamine, diethanolamine and dimethylethanolamine, are preferred owing to the good stability of their aqueous dispersions.

Said amine can be directly incorporated into the cationic electrodeposition coating composition according to the present invention. While, in the prior art cationic electrodeposition coating compositions of the neutralized amine type, the addition of a free amine results in deprivation of the neutralizing acid in the resin, leading to a marked decrease in stability of the electrodeposition solution, such bath stability impairment is never encountered in the practice of the present invention.

Said amine is added preferably in an amount of 0.3 to 25 meq (milliequivalents) per 100 grams of the resin solid matter in the cationic electrodeposition coating composition. When it is less than 0.3 meq/100 grams, the effect on the throwing power cannot be sufficient. At addition levels above 25 meq/100 grams, any additional effect corresponding to the addition level cannot be obtained and this is uneconomical. An addition level of 1 to 15 meq/100 grams is more preferred.

It is also possible to incorporate an aliphatic hydrocarbon group-containing resin composition into the cationic electrodeposition coating composition according to the present invention. By incorporating said aliphatic hydrocarbon group-containing resin composition, the coatings obtained are improved in impact resistance. As said aliphatic hydrocarbon group-containing resin composition, there may be mentioned those which contain 5 to 400 millimoles of a sulfonium group, 80 to 135 millimoles of an aliphatic C₈₋₂₄ hydrocarbon group optionally containing an unsaturated double bond in the chain thereof, and 10 to 315 millimoles of an unsaturated double bond-terminated organic group containing 3 to 7 carbon atoms and/or a propargyl group, per 100 grams of the solid matter in the resin composition, and in which total content of said sulfonium group, aliphatic C₈₋₂₄ hydrocarbon group optionally containing an unsaturated double bond in the chain thereof, unsaturated double bond-terminated organic group containing 3 to 7 carbon atoms and propargyl group is not more than 500 millimoles per 100 grams of the solid matter in the resin composition.

When such aliphatic hydrocarbon group-containing resin composition is incorporated in the above cationic electrodeposition coating composition, it is preferred that the sulfonium group content be 5 to 400 millimoles, the content of the aliphatic hydrocarbon group which contains 8 to 24 carbon atoms and may contain an unsaturated double bond in the chain thereof be 10 to 300 millimoles and the total content of the propargyl group and the unsaturated double bond-terminated organic group containing 3 to 7 carbon atoms be 10 to 485 millimoles, per 100 grams of the resin solid matter in the cationic electrodeposition coating composition, the total content of the sulfonium group, the aliphatic hydrocarbon group which contains 8 to 24 carbon atoms and may optionally contain an unsaturated double bond in the chain thereof, the propargyl group and the unsaturated double bond-terminated organic group containing 3 to 7 carbon atoms be not more than 500 millimoles per 100 grams of the resin solid matter in the cationic electrodeposition coating composition, and the content of said aliphatic hydrocarbon group which contains 8 to 24 carbon atoms and may contain an unsaturated double bond in the chain thereof be 3 to 30% by weight relative to the resin solid matter in the cationic electrodeposition coating composition.

If the sulfonium group content is less then 5 millimoles per 100 grams when an aliphatic hydrocarbon group-containing resin composition is incorporated in the above cationic electrodeposition coating composition, sufficient throwing power and/or curability may not be attained and the hydratability and bath stability tend to become worse. If said content exceeds 400 millimoles per 100 grams, the deposition of coatings on the substrate surface may become poor. If the content of the aliphatic hydrocarbon groups which contains 8 to 24 carbon atoms and may contain an unsaturated double bond in the chain thereof is less than 80 millimoles per 100 grams, the impact resistance may not be improved to a satisfactory extent. If it exceeds 350 millimoles per 100 grams, the resin composition becomes difficult to handle. If the total content of the propargyl group and unsaturated double bond-terminated organic group containing 3 to 7 carbon atoms is less than 10 millimoles per 100 grams, sufficient curability may not be obtained even when another resin and/or a curing agent is used in combination. If it is above 315 millimoles per 100 grams, the impact resistance is improved only to an unsatisfactory extent. The total content of the sulfonium group, the aliphatic hydrocarbon group which contains 8 to 24 carbon atoms and may contain an unsaturated double bond in the chain thereof, the propargyl group and the unsaturated double bond-terminated organic group containing 3 to 7 carbon atoms is not more than 500 millimoles per 100 grams of the solid matter in the resin composition. If it exceeds 500 millimoles, no resin may be obtained in practice or the desired performance characteristics may not be obtained in some instances.

Although the cationic electrodeposition coating composition of the present invention can provide excellent corrosion resistance even when it does not contain any solid rust preventive component, an organic liquid rust preventive component may be added thereto if further improved corrosion resistance is desired.

Said composition may contain a further component or components commonly used in cationic electrodeposition coating compositions in general, if necessary. Said further components are not particularly restricted but include, among others, such paint additives as surfactants, antioxidants and ultraviolet absorbers. Furthermore, when said composition contains a solid colorant component, a pigment dispersing resin in general use or a pigment dispersing resin containing a sulfonium group therein may be used. In addition, if it is desired that the cationic electrodeposition coating composition of the present invention be colored without causing the same to contain a solid colorant, a dye soluble in the cationic electrodeposition coating composition can be used.

The curing temperature of the cationic electrodeposition coating composition according to the present invention is preferably set at 130°C to 220°C. If the curing temperature is lower than 130°C, the smoothness of the double-layer coatings described hereinafter may possibly be deteriorated. If the curing temperature is above 220°C, the double-layer coatings described hereinafter may have poor physical properties or the multilayer coatings resulting from further application of a top coat composition to said double-layer coatings may have a deteriorated appearance. The curing temperature setting can be made in the manner well known in the art, for example by selecting and adjusting the species and amounts of the curing functional group or groups, the curing agent, the catalyst, and so on.

The "curing temperature" as so referred to herein means the temperature at which coatings with a gel fraction of 85% can be obtained by heating for 30 minutes. Said gel fraction is determined by immersing a coated test plate in acetone and refluxing the acetone for 5 hours, followed by calculation from the weight difference between the coated test plate before refluxing and that after refluxing.

The cationic electrodeposition coating composition according to present invention can be prepared, for example, by admixing the above resin composition with the components mentioned above as necessary and dissolving or dispersing the mixture in water. When said composition is to be used for cationic electrodeposition coating, adjustment is preferably made so that a bath liquid with a nonvolatile matter content of 10 to 30% may be obtained. It is also preferred that the propargyl group, carbon-carbon double bond and sulfonium group contents be adjusted without departing the respective ranges specified above in relation to the resin composition.

### Method for forming double-layer coatings

The method for forming double-layer coatings according to the present invention comprises electrodepositing the above cationic electrodeposition coating composition to a substrate and then applying an intermediate coating composition containing a rust preventive component to thereby form double-layer coatings. Said rust preventive component includes the above-mentioned solid rust preventive components and liquid rust preventive components.

The substrate, or article to be coated, to be subjected to the method for forming double-layer coatings according to the present invention is not particularly restricted but may be any one capable of being coated by cationic electrodeposition and showing no deterioration upon heating for curing. Thus, for example, there may be mentioned flat plates or sheets, such as iron sheets, steel sheets, aluminum sheets and the like and other moldings, which may be surface-treated.

Said electrodeposition is carried out by immersing the substrate, which is to serve as a cathode, in the cationic electrodeposition coating composition and applying a voltage generally of 50 to 450 V between said cathode and an anode If the voltage applied is lower than 50 V, the electrodeposition will be insufficient. If it exceeds 450 V, the power consumption will become uneconomically excessive. When the composition of the present invention is used and a voltage within the above range is applied, a uniform coating can be formed all over the substrate without an abrupt increase in coating thickness in the process of electrodeposition. When the above voltage is applied, it is generally preferred that the cationic electrodeposition coating composition bath temperature be 10 to 45°C. The period for voltage application may be selected generally within the range of 2 to 4 minutes although it may vary depending on the electrodeposition conditions.

In the above electrodeposition, a voltage can be further applied to the coating deposited upon application of a voltage between the substrate, which is the cathode, and the anode, to thereby increase the electric resistance per unit volume of said coating.

After completion of the electrodeposition process, the thus-obtained electrodeposited coating is cured, either as such or after washing with water, by baking at 120 to 260°C, preferably 160 to 220°C, for 10 to 30 minutes to complete the coating process. It is also possible to adopt the two-coat one-bake technique which comprises applying an intermediate coating composition, which is to be mentioned later herein, on the electrodeposited coating obtained in the above manner without curing said electrodeposited coating, in the so-called wet-on-wet manner, to form an uncured intermediate coating, and heating both the uncured coatings simultaneously to give a double-layer coating.

It is preferred that the cured electrodeposited coating formed from the above cationic electrodeposition coating composition have a thickness of 10 to 25 µm. If it is less than 10 µm, the rust resistance will be insufficient. If it exceeds 25 µm, the extra amount of the coating composition may mean a waste of material.

In the method for forming double-layer coatings according to the present invention, an intermediate coating composition containing a rust preventive component is applied after electrodeposition coating, as mentioned above. Said intermediate coating composition is not particularly restricted but, where the substrate is an automotive shell plate or sheathing, for instance, an intermediate coating composition currently used for automobiles is preferably used. Such composition has performance characteristics required of intermediate coating compositions for automobiles, such as adhesiveness, smoothness, sharp reflectiveness, overbaking resistance and weathering resistance. It generally comprises a binder and a curing agent and is of the heat curing type. As said binder, there may be mentioned, for example, acrylic resins, polyester resins, alkyd resins and epoxy resins.

As said acrylic resins, there may be mentioned products of copolymerization of ethylenically unsaturated group-containing monomers in the conventional manner. Such ethylenically unsaturated monomers are not particularly restricted but include, among others, 2-hydroxyethyl (meth)acrylate, 2-hydroxypropyl (meth)acrylate, 4-hydroxybutyl acrylate, Placcel FM series monomers (trademark; 2-hydroxyethyl (meth)acrylate-polycaprolactone adducts; products of Daicel Chemical Industries), polyalkylene glycol mono(meth)acrylate and like hydroxy-containing monomers, glycidyl acrylate, glycidyl methacrylate, 2-methylglycidyl methacrylate and like epoxy-containing monomers, dimethylaminoethyl (meth)acrylate, diethylaminoethyl (meth)acrylate and like amino-containing monomers, (meth)acrylamide, N-methyl(meth)acrylamide, N-butoxymethyl(meth)acrylamide, N-methylacrylamide and like acrylamide monomers. Other monomers are also usable, for example acrylonitrile, vinyl acetate, acrylic acid, methacrylic acid, methyl (meth)acrylate, ethyl (meth)acrylate, n-butyl (meth)acrylate, isobutyl (meth)acrylate, tert-butyl (meth)acrylate, styrene, vinyltoluene, p-chlorostyrene and the like. These may be used singly or two or more of them may be used in combination.

Said polyester resins can be obtained by subjecting an acid component mainly comprising a polybasic carboxylic acid and an alcohol component mainly comprising a polyhydric alcohol to polycondensation in the conventional manner. Said acid component is not particularly restricted but includes, among others, aromatic dicarboxylic acids and anhydrides thereof, such as terephthalic acid, isophthalic acid, phthalic acid and anhydrides thereof, 2,6-naphthalenedicarboxylic acid and 2,7-naphthalenedicarboxylic acid; aliphatic dicarboxylic acids and anhydrides thereof, such as succinic acid, adipic acid, azelaic acid, sebacic acid, dodecanedioic acid and 1,4-cyclohexanedicarboxylic acid; lactones such as γ-butyrolactone and ε-caprolactone; aromatic hydroxy monocarboxylic acids such as p-hydroxyethoxybenzoic acid, and hydroxy carboxylic acids corresponding to these. These may be used singly or two or more of them may be used combinedly.

The above alcohol component is not particularly restricted but includes, among others, ethylene glycol, 1,3-propanediol, 1,4-butanediol, 1,5-pentanediol, 1,5-hexanediol, diethylene glycol, triethylene glycol, 1,4-cyclohexanediol, 1,4-cyclohexanedimethanol, bisphenol A-alkylene oxide adducts, bisphenol S-alkylene oxide adducts, 1,2-propanediol, neopentyl glycol, 1,2-butanediol, 1,3-butanediol, 1,2-pentanediol, 2,3-pentanediol, 1,4-pentanediol, 1,4-hexanediol, 2,5-hexanediol, 3-methyl-1,5-pentanediol, 1,2-dodecanediol, 1,2-octadecanediol and like aliphatic glycols having a side chain; trimethylolpropane, glycerol, pentaerythritol and like trihydric or polyhydric alcohols. These may be used singly or two or more of them may be used in combination.

The alkyd resins can be obtained by subjecting the acid component and alcohol component which are used for producing the polyester resins mentioned above, together with a monohydric alcohol component, to polycondensation in the conventional manner. Said monohydric alcohol component is not particularly restricted but includes, among others, soybean oil, safflower oil, coconut oil, linseed oil and benzoic acid. In the case of intermediate coating compositions for automobiles, short-oil or ultrashort-oil alkyd resins having an oil length of not more than 30% are preferably used as said alkyl resins from the viewpoint of storage stability of coating compositions and weathering resistance of coatings.

Preferred as said epoxy resins are, for instance, compounds containing two or more glycidyl groups (including oxiranes) per molecule. More specifically, glycidyl ester resins, condensation products from bisphenol A and epichlorohydrin, condensation products from bisphenol F and epichlorohydrin and like glycidyl ether type resins; alicyclic epoxy resins, linear aliphatic epoxy resins, bromine-containing epoxy resins, phenol novolak type epoxy resins, cresol novolak type epoxy resins and the like can be used.

Said curing agent can be selected from among various ones depending on the curing functional group(s) which the above binder has. Where said binder has a hydroxy group as the curing functional group, for instance, use may be made, as the curing agent, of amino resins, blocked isocyanate compounds, aliphatic polybasic carboxylic acids and anhydrides thereof, and epoxy resins. These may be used singly or two or more of different types or of the same type may be used in combination unless there arises a curability problem.

As said amino resins, there may be mentioned, among others, melamine resins, benzoguanamine resins, urea resins and glycoluril resins. As the melamine resins, there may be mentioned melamine and alkyl-etherified melamines derived from melamine by substitution with alkyl ether groups. Preferred as said alkyl ether groups are methoxy and butoxy groups.

Usable as said blocked isocyanate compounds are polyisocyanate compounds blocked with a blocking agent. Said polyisocyanate compounds are not particularly restricted but includes compounds having at least two isocyanato groups per molecule, for example aliphatic diisocyanates such as hexamethylene diisocyanate and trimethylhexamethylene diisocyanate; alicyclic diisocyanates such as isophorone diisocyanate; aromatic diisocyanates such as tolylene diisocyanate and 4,4'-diphenylmethanediisocyanate; dimer acid diisocyanate, hydrogenated diisocyanates, dimers and trimers of these diisocyanate compounds and, further, high-molecular-weight polyisocyanates; and their adducts with polyhydric alcohols such as trimethylolpropane, with water or with low-molecular-weight polyester resins, and the like These may be used singly or two or more may be used in combination. The blocking agent mentioned above is not particularly restricted but includes, among others, oximes such as methyl ethyl ketoxime, acetoxime, cyclohexanone oxime, acetophenone oxime and benzophenone oxime; phenols such as m-cresol and xylenol; alcohols such as methanol, ethanol, butanol, 2-ethylhexanol, cyclohexanol and ethylene glycol monomethyl ether; lactams such as ε-caprolactam; diketones such as diethyl malonate and acetoacetic acid esters, mercaptans such as thiophenol; ureas such as thiourea, imidazoles, carbamic acids and the like.

As said aliphatic polybasic carboxylic acids, there may be mentioned those aliphatic dicarboxylic acids specifically mentioned above in relation to the polyester resins.

As said epoxy resins, there may be mentioned those epoxy resins specifically mentioned hereinabove in relation to the curing agents, as well as polyepoxy compounds such as triglycidyl isocyanurate.

On the other hand, where said binder has an acid group as the curing functional group, the epoxy resins mentioned above are generally used and, in addition, polyhydroxy compounds, hydroxyalkylamides and the like can also be used.

The above-mentioned intermediate coating composition may take various forms such as the solvent type, aqueous or aqueous dispersion type, or powders. These forms can be controlled by methods well known in the art. The aqueous or aqueous dispersion form, for instance, can be obtained by introducing a water-soluble group, for example an acid group, into the binder and neutralizing the same with a basic substance, for example an amine. The powder form can be obtained by setting the glass transition temperature of the binder and of the curing agent at a level higher than room temperature.

The intermediate coating composition to be used in the method for forming double-layer coatings according to the present invention contains a rust preventive component in addition to the above-mentioned thermosetting resin and curing agent. This rust preventive component includes the same ones as those specifically mentioned hereinabove in relation to the cationic electrodeposition coating composition. Considering the possible influences on the environment, however, those other than lead compounds are preferred and calcium- and/or zinc-containing phosphite salts or silicate compounds are more preferred.

When necessary, said intermediate coating composition may further contain one or more of color pigments, filler pigments, surface modifiers, leveling agents, ultraviolet absorbers, light stabilizers, antistatic agents, thixotropic agents and other additives.

In the method for forming double-layer coatings according to the present invention, said intermediate coating composition can be applied by a method well known in the art as selected depending on the form of the coating composition. Thus, for instance, spray coating, brushing, dipping or electrostatic coating can be employed. In the coating step in an automotive body production line, in particular, the electrostatic coating method is preferably employed. The coating thickness of said intermediate coating composition, when expressed in terms of dry film thickness, is 10 to 50 µm, preferably 20 to 30 µm.

When, in the method for forming double-layer coatings according to the present invention, the cationic electrodeposition coating composition and intermediate coating composition are applied by the so-called wet-on-wet technique, the intermediate coating composition to be used in the practice of the present invention preferably has a curing temperature set at 110 to 200°C. If the curing temperature is below 110°C, the double-layer coatings obtained may show impaired smoothness or said double-layer coatings or the multilayer coatings obtained after application of a top coating composition thereto may show an impaired appearance. If the curing temperature is above 200°C, the double-layer coatings obtained may show decreased physical properties or the multilayer coatings obtained after application of a top coating composition thereto may shown an impaired appearance. The curing temperature setting can be realized by a method well known in the art, for example by selecting or adjusting the curing functional group(s), curing agent and catalyst and the proportions thereof.

Here, the value calculated according to the formula (curing temperature of intermediate coating composition) - (curing temperature of cationic electrodeposition coating composition) is preferably within the range of -35°C to 15°C. If said value is greater than 15°C, the double-layer coatings obtained may show decreased physical properties. If the above value is smaller than -35°C, the double-layer coatings obtained may show impaired smoothness or a color difference.

The term "curing temperature" means the lowest heating temperature required for the coatings to attain a gel fraction of 85%. The gel fraction can be measured by immersing the test coatings in acetone, refluxing at 53-54°C for 5 hours and comparing the weight of the test coatings before testing and that after testing to calculate the weight difference.

In the other case than the above-mentioned one, namely when the intermediate coating composition is applied to the coatings obtained by curing the cationic electrodeposition coating composition, the intermediate coating composition is heated under heating conditions appropriate to the properties thereof. In this way, the double-layer coatings are obtained.

### Double-layer coatings and multilayer coatings

As mentioned above, the double-layer coating of the present invention are composed of a cationically electrodeposited coating layer obtained from the cationic electrodeposition coating composition free of any solid rust preventive component and a coating layer on the cationically electrodeposited coating layer as obtained from a coating composition containing a rust preventive component.

While they are excellent in corrosion resistance, the double-layer coatings of the present invention can be further coated with a top coating composition to give multilayer coatings provided with a certain appearance. Said top coating composition is not particularly restricted but is preferably one generally used as a top coating composition for automobiles. Such should be excellent in such properties as finished appearance (sharp reflectiveness, smoothness, gloss, etc.), weathering resistance (gloss retention, color retention, chalking resistance, etc.), chemical resistance, water resistance, moisture resistance and curability and may be a solid color coating composition used as a one-coat solid paint, or a combination of a base coating composition and a clear coating composition, which can be applied by the two-coat one-bake coating technique.

Said solid color coating composition, base coating composition and clear coating composition each may be an aqueous or solvent type one or a powder composition and is preferably a heat-curable one. Thus, for instance, the heat-curable aqueous solid color coating composition may comprise a combination of a water-soluble or water-dispersible high-molecular compound, for example an aqueous acrylic resin solution prepared by neutralizing a hydroxy- and carboxyl-containing acrylic resin with an amine or the like, and a resin capable of reacting with said high-molecular compound, for example a water-soluble or water-dispersible amino resin or blocked isocyanate resin. The heat-curable solvent-type solid color coating composition may comprise, for example, a combination of any of various organic solvents, a high-molecular compound soluble therein, for example a hydroxy-containing acrylic resin, and a compound capable of reacting with said high-molecular compound, for example an amino resin, polyisocyanate or blocked isocyanate. Said heat-curable solid color coating composition contains one or more inorganic or organic color pigments well known in the art, such as carbon black, phthalocyanine blue and titanium dioxide. In addition, one or more of filler pigments, curing promoters, leveling agents, ultraviolet absorbers, light stabilizers and other additives may be incorporated therein.

The heat-curable base coating composition is not particularly restricted but may be one containing those components used in the above heat-curable solid color coating composition. Further, said base coating composition may be a metallic base coating composition containing flaky aluminum, flaky mica or a like well known reflective material. From the environmental protection viewpoint, it is preferred that the above heat-curable solid color coating composition and heat-curable base coating composition be aqueous ones.

On the other hand, the heat-curable clear coating composition is not particularly restricted, either, but includes, among others those solvent type ones in which any of various organic solvents, a high-molecular compound soluble therein, for example a hydroxy-containing acrylic resin or polyester resin, and a compound capable of reacting with said high-molecular compound, for example an amino resin, polyisocyanate or blocked isocyanate, are combined, or a solvent, an acrylic resin having a half ester group derived from an acid anhydride group by ring opening esterification and a hydroxy- and epoxy-containing compound are combined. Aqueous type ones derived from these may also be used.

The heat-curable clear coating composition in powder form may be a substantially water- or organic solvent-free one in which, for example, a hydroxy-containing acrylic resin or polyester resin and a compound capable of reacting with this high-molecular compound, for example an amino resin, polyisocyanate or blocked isocyanate, are combined or an epoxy-containing acrylic resin and a polybasic carboxylic acid or polybasic carboxylic anhydride or the like are combined In said heat-curable clear coating composition, there may be incorporated one or more of the above-mentioned color pigments and reflective materials to an extent such that the transparency is never impaired. It is also possible to use curing promoters, leveling agents, ultraviolet absorbers, light stabilizers and other additives.

The method for applying said top coating composition is not particularly restricted but those coating methods which are well known in the art can be selectively used according to the form of the top coating composition as it is the case with intermediate coatings. Thus, for example, the spray coating, brushing, dipping and electrostatic coating techniques can be employed. In the coating step in an automotive body production line, in particular, the electrostatic coating technique is advantageously employed.

When the top coating composition is a solid color coating composition such as mentioned above, it is preferably applied to the double-layer coatings to a dry thickness of 30 to 100 µm. It is also possible to perform a plurality of applications, for example application in two stages.

When the top coating composition is a combination of a heat-curable base coating composition and a heat-curable clear coating composition, the heat-curable base coating composition is first applied to a dry thickness of 10 to 20 µm by the same coating techniques as mentioned above for the solid color coating composition. It is also possible to perform this coating step by a plurality of applications, for example application in two stages. In cases where the base coating composition is an aqueous one, preliminary drying may be made at 60 to 120°C for 2 to 10 minutes. After application or preliminary drying and the subsequent 2 to 5 minutes of setting, the heat-curable clear coating composition is applied preferably to a dry thickness of 40 to 100 µm, using the techniques mentioned above.

The substrate coated with the top coating composition in the above manner is placed in a drying oven maintained at 130 to 200°C and heated for 10 to 30 minutes, whereby a multilayer coating can be obtained.

### EXAMPLES

The following examples illustrate the present invention in further detail. They are, however, by no means limitative of the scope of the present invention.

### Production Example 1

### Production of a sulfonium- and propargyl-containing epoxy resin composition

A separable flask equipped with a stirrer, thermometer, nitrogen inlet tube and reflux condenser was charged with 100.0 weight parts of Epo Tohto YDCN-701 (cresol novolak type epoxy resin; product of Tohto Kasei) with an epoxy equivalent of 200.4, 23.6 weight parts of propargyl alcohol and 0.3 weight part of dimethylbenzylamine, the temperature was raised to 105°C, and the reaction was allowed to proceed for 3 hours, to give a propargyl-containing resin composition with an epoxy equivalent of 1,580 To this was added 2.5 weight parts of copper acetylacetonate, and the reaction was allowed to proceed at 90°C for 1.5 hours. Partial disappearance of the terminal hydrogen of the propargyl group as a result of addition was confirmed by proton (1H) NMR (the content of the acetylide-form propargyl corresponding to 14 millimoles per 100 grams of the resin solid matter). Thereto were added 10.6 weight parts of 1-(2-hydroxyethylthio)-2,3-propanediol, 4.7 weight parts of glacial acetic acid and 7.0 weight parts of deionized water and the reaction was allowed to proceed for 6 hours while maintaining the temperature at 75°C. Then, after confirming that the residual acid value was not more than 5, 43.8 weight parts of deionized water was added, to give the desired resin composition in solution form. This had a solid content of 70.0% by weight and a sulfonium value of 28.0 millimoles per 100 grams of the varnish. The number average molecular weight (determined by GPC and expressed in terms of polystyrene equivalent) was 2,443.

### Production Example 2

### Preparation of a polyester resin composition

A separable flask equipped with a stirrer, thermometer, nitrogen inlet tube, reflux condenser and water trap was charged with 415 weight parts of isophthalic acid, 90 weight parts of adipic acid, 100 weight parts of trimethylolpropane, 200 weight parts of neopentyl glycol, 195 weight parts of 2,2-dimethyl-3-hydroxypropyl 2,2-dimethyl-3-hydroxypropionate and 2 weight parts of dibutyltin oxide, and the temperature was raised to 210°C. From 160°C to 210°C, however, the temperature was raised at a constant rate over 3 hours. The water resulting from condensation was distilled off out of the system utilizing the water trap. After the temperature reached 210°C, the temperature was maintained for 1 hour and then 30 weight parts of xylene was added, as a refluxing solvent, gradually into the separable flask to change over to condensation in the presence of the solvent, and the reaction was continued. When the acid value of the resin solid matter reached 8.5 mg KOH/g, the reaction mixture was cooled to 150°C, 200 weight parts of ε-caprolactone was added, the temperature was maintained at 150°C for 2 hours and then the mixture was cooled to 100°C. Further, 430 weight parts of xylene was added, to give a polyester resin composition with a number average molecular weight of 3,000, an acid value of 7 mg/KOH/g and a hydroxy value of 93 mg KOH/g of the resin solid matter, and a nonvolatile matter content of 70% by weight.

### Production Example 3

### Production of a rust preventive-free intermediate coating composition

To 480 weight parts of the polyester resin composition obtained in Production Example 2 were added 70 weight parts of xylene, 250 weight parts of titanium dioxide R-61N (product of Sakai Chemical Industry), 135 weight parts of barium sulfate B-34 (product of Sakai Chemical Industry), 10 weight parts of talc LMR-100 (product of Fuji Talc Kogyo), 5 weight parts of carbon black MA-100 (product of Mitsubishi Chemical), 5 weight parts of surface modifier BYK-161 (product of Byk Chemie) and 5 weight parts of organic bentonite New D Orben (product of Tsuchiya Kaolin Kogyo). After preliminary mixing, the mixture was stirred for attaining dispersion in a paint conditioner, with a glass bead medium added, at room temperature for 1 hour, to give a paste with a particle size not more than 5 µm and a nonvolatile matter content of 77%. In 96 weight parts of this paste were incorporated 28 weight parts of melamine resin Cymel 202 (product of Mitsui Cytec) and 0.1 weight part of surface modifier Resimix RL-4 (product of Mitsui Petrochemical), to give a rust preventive-free intermediate coating composition.

### Production Example 4

### Production of a rust preventive-containing intermediate coating composition

A rust preventive-containing intermediate coating composition was produced in the same manner as in Production Example 3 except that 88 weight parts of calcium phosphite was added in the step of paste preparation.

### Example 1

### Production of a cationic electrodeposition coating composition

To 142.9 weight parts of the epoxy resin composition obtained in Production Example 1 was added 157.1 weight parts of deionized water and, after 1 hour of stirring using a high-speed rotary mixer, 373.3 weight parts of deionized water was further added to thereby adjust the solid concentration of the aqueous solution to 15% by weight. Thus was obtained a cationic electrodeposition coating composition.

### Example 2

### Production of double-layer coatings

The cationic electrodeposition coating composition obtained in Example 1 was transferred to a stainless steel vessel and used as an electrodeposition bath. A zinc phosphate-treated cold-rolled steel sheet (JIS G3141 SPCC-SD, treated with Nippon Paint's zinc phosphate-based treating agent Surfdyne SD-5000) was immersed in said bath to serve as a substrate and cathode, and electrodeposition coating was carried out to a dry coat film thickness of 15 µm. Thereafter, the coated substrate was taken out of the electrodeposition bath in the stainless steel vessel, washed with water, placed in a drying oven maintained at 180°C and heated for 30 minutes to give a cationically electrodeposited coating.

To the uncured coating obtained by the above cationic electrodeposition coating was applied the intermediate coating composition obtained in Production Example 2 or 3, by the air spray coating technique at 23°C to a dry thickness of 35 µm. After 5 minutes of setting, each coated substrate was placed in a drying oven maintained at 140°C and heated for 30 minutes to give a double-layer coating composed of the cationically electrodeposited coating and an intermediate coating.

### Comparative Example 1

Using the cationic electrodeposition coating composition Powertop U-30 (blocked isocyanate curing type basic amino group-containing resin-based cationic electrodeposition coating composition, containing basic lead silicate; product of Nippon Paint) as the electrodeposition bath, a zinc phosphate-treated cold-rolled steel sheet (JIS G3141 SPCC-SD, treated with Nippon Paint's zinc phosphate-based treating agent Surfdyne SD-5000) was immersed in said bath to serve as a substrate and cathode, and electrodeposition coating was carried out to a dry coat film thickness of 25 µm. Thereafter, the coated substrate was taken out of the electrodeposition bath in the stainless steel vessel, washed with water, placed in a drying oven maintained at 160°C and heated for 30 minutes to give a cationically electrodeposited coating.

To the uncured coating obtained by the above cationic electrodeposition coating was applied the intermediate coating composition obtained in Production Example 2, by the air spray coating technique at 23°C to a dry thickness of 35 µm. After 5 minutes of setting, the coated substrate was placed in a drying oven maintained at 140°C and heated for 30 minutes to give a double-layer coating composed of the cationically electrodeposited coating and an intermediate coating.

### Comparative Example 2

A double-layer coating was obtained in the same manner as in Comparative Example 1 except that a cationic electrodeposition coating composition derived from Powertop U-30 by eliminating the basic lead silicate from the system and that the intermediate coating composition obtained in Production Example 3 was used as the intermediate coating composition.

### Example 3

### Production of double-layer coatings and multilayer coatings by the wet-on-wet technique

The cationic electrodeposition coating composition obtained in Example 1 was transferred to a stainless steel vessel and used as an electrodeposition bath. A zinc phosphate-treated cold-rolled steel sheet (JIS G3141 SPCC-SD, treated with Nippon Paint's zinc phosphate-based treating agent Surfdyne SD-5000) was immersed in said bath to serve as a substrate and cathode, and electrodeposition coating was carried out to a dry coat film thickness of 15 µm. Thereafter, the coated substrate was taken out of the electrodeposition bath in the stainless steel vessel and washed with water to give a coated substrate with an uncured cationically electrodeposited coating.

After removal of surface water drops using an air knife, Orga P-2 (solvent type melamine curing type polyester resin-based intermediate coating composition; product of Nippon Paint) was applied, by the air spray coating technique, to the uncured coating obtained by the above cationic electrodeposition coating, at 23°C to a dry thickness of 40 µm, whereby an uncured intermediate coating was formed on the uncured cationically electrodeposited coating.

After 5 minutes of setting, the coated substrate was placed in a drying oven maintained at 180°C and heated for 30 minutes to give a double-layer coating.

The coated substrate was cooled to room temperature, Superlac M-260 (aqueous melamine curing type acrylic resin-based base coating composition giving a silver color; product of Nippon Paint) was applied to the above double-layer coating at 23°C and a relative humidity of 85% in two stages at an interval of 1 minute by the air spray coating technique to a dry thickness of 20 µm. After 3 minutes of setting, Macflow O-330 (solvent type clear coating composition composed of an acid anhydride half ester-containing compound and an epoxy- and hydroxy-containing compound; product of Nippon Paint) was applied at 23°C by the air spray coating technique to a dry thickness of 50 µm. The resulting coated substrate was placed in a drying oven maintained at 140°C and heated for 30 minutes to give a multilayer coating. Upon evaluation by macroscopic observation, the multilayer coating obtained was good in smoothness.

For evaluating the color difference characteristic of the multilayer coating, 10 sites of the coating were measured for ΔE using a colorimeter SM color computer SM-7 (product of Suga Shikenki) with reflection as the measurement condition, and the mean value was calculated. The mean ΔE was 2.1 and the evaluation result was good. The standard plates used for color difference measurements were tin plates with respective coatings to be evaluated being directly formed thereon. The heating conditions used in preparing the standard plates were the same as those used in obtaining the coatings to be evaluated.

### Corrosion resistance evaluation test

The double-layer coatings obtained in Example 2 and comparative Examples 1 and 2 were sprayed with a 5% aqueous solution of sodium chloride at 35°C for 960 hours according to JIS Z 2371. Each cross-cut section was subjected to a peeling test using an adhesive tape, the width of peeling was measured on one side of the cut section and, when it was less than 1.5 mm, the coating was regarded as passing the test. The results are shown in Table 1.

**Table 1**

| | | Example | | Comparative Example | |
|---|---|---|---|---|---|
| Cationic electrodeposition coating composition | | Example 1 | | Powertop U-30 | Powertop U-30 modified*¹ |
| | Solid rust preventive | None | | Basic lead silicate | None |
| Intermediate coating composition | | Production Example 2 | Production Example 3 | Production Example 2 | Production Example 3 |
| | Solid rust preventive | None None | Calcium phosphite | None None | Calcium phosphite |
| Peeling width (mm) | | 1.2 | 0.8 | 1.3 | 3.8 |

| | | | | | |
|---|---|---|---|---|---|
| *1 Powertop U-30 deprived of basic lead silicate. | | | | | |

### EFFECT OF THE INVENTION

The cationic electrodeposition coating composition of the present invention can give cationically electrodeposited coatings with high corrosion resistance even when it does not contain such solid rust preventive component as a lead compound, for example basic lead silicate; it thus can minimize the environmental pollution. Further, when the cationic electrodeposition coating composition of the present invention is prepared as a clear electrodeposition coating composition free of such solid rust preventive component and other solid components, and the dispersion stability management, which is an important matter with respect to the prior art cationic electrodeposition coating compositions, is no more required, hence the bath control becomes very easy.

Furthermore, as compared with the prior art cationic electrodeposition coating compositions, the cationic electrodeposition coating composition of the present invention can provide an equivalent level of corrosion resistance with thinner coatings.

These are presumably due to some or other interaction of the sulfonium group and/or propargyl group, which the resin composition contained in the cationic electrodeposition coating composition of the present invention has, with a metal as the substrate to be coated, and due to the resulting improvement in adhesiveness as compared with the conventional compositions. They are also ascribable to the excellent throwing power of said resin composition and to the resulting uniform coat film formation all over the substrate The method for forming double-layer coatings according to the present invention can further improve the corrosion resistance of the double-layer coatings when a rust preventive component is caused to be contained in the intermediate coating composition. The reason is not clear although it is supposed that the permeability of corrosive components can be prevented by the intermediate coating layer.

## Claims

1. A cationic electrodeposition coating composition which comprises a sulfonium- and propargyl-containing resin composition as main component and which contains no solid rust preventive component.

2. The cationic electrodeposition coating composition according to Claim 1, which does not contain any other solid component.

3. The cationic electrodeposition coating composition according to Claim 1 or 2, wherein said resin composition comprises a resin having an epoxy backbone and has a sulfonium group content of 5 to 400 millimoles and a propargyl group content of 10 to 495 millimoles per 100 g of the solid matter in the resin composition, the total content of the sulfonium and propargyl groups being not more than 500 millimoles per 100 g of the solid matter in the resin composition.

4. A method for forming double-layer coatings, which comprises electrodepositing the cationic electrodeposition coating composition according to any one of Claims 1 to 3 to a substrate and then applying thereto an intermediate coating composition containing a rust preventive component to thereby form a double-layer coating.

5. The method for forming double-layer coatings according to Claim 4, wherein said rust preventive component comprises a phosphite salt or silicate compound containing calcium and/or zinc.

6. A double-layer coating composed of a cationically electrodeposited coating layer and a coating layer further formed thereon, said cationically electrodeposited coating layer being obtained from a cationic electrodeposition coating composition containing no rust preventive component, and said coating layer formed on said cationically electrodeposited coating layer being obtained from a coating composition containing a rust preventive component.
